# EUROPEAN PATENT SPECIFICATION

(11) **EP 3 434 440 B1**
(45) Date of publication and mention of the grant of the patent: **08.05.2024**
(21) Application number: 17770460.8
(22) Date of filing: 27.03.2017
(51) Int. Cl.: B29C 45/66, B22D 17/26

(54) **INJECTION MOLDING MACHINE**
SPRITZGIESSMASCHINE
MACHINE DE MOULAGE PAR INJECTION

(30) Priority: 25.03.2016 JP 2016062415
(43) Date of publication of application: 30.01.2019
(73) Proprietor: Sumitomo Heavy Industries, Ltd., Tokyo 141-6025 (JP)
(72) Inventor: ITO, Yosuke, Chiba-shi Chiba 263-0001 (JP); MIYATAKE, Tsutomu, Chiba-shi Chiba 263-0001 (JP)
(74) Representative: Louis Pöhlau Lohrentz
(86) International application number: PCT/JP2017/012487
(87) International publication number: WO 2017/164421

(56) References cited:
- WO-A1-2016/002836
- JP-A- H07 205 237
- JP-A- H07 205 237
- JP-A- 2003 033 955
- JP-A- 2003 033 955
- JP-A- 2014 208 435
- JP-U- S5 757 925
- JP-U- S5 757 925
- US-A1- 2014 295 020
- US-B1- 6 478 571

## Description

### Technical Field

The present invention relates to an injection molding machine.

### Background Art

An injection molding machine disclosed in PTL 1 includes a stationary platen on which a stationary mold is mounted, a movable platen on which a movable mold is mounted, and a drive unit which moves the movable platen and the stationary platen to be close to each other or to be away from each other. The drive unit includes a guide rod of which both ends are supported by a toggle support and a rod support, a crosshead which is provided to e movable along the guide rod, and a link mechanism which is connected to the crosshead. Injection molding machines according to the prior art are also known from JP 2003 033955 A, JP S57 57925 U, JP H07 205237 A, US 2014/295020 A1, WO 2016/002836 A1 and US 6,478,571 B1.

### Citation List

### Patent Literature

[PTL 1] Japanese Unexamined Patent Application Publication No. 2009-132087

### Summary of Invention

### Technical Problem

In the related art, there are concerns that an inclination of a crosshead increases and a motion conversion mechanism which converts a rotary motion of a motor into a linear motion of a crosshead is damaged by an unbalanced load.

The present invention is made in consideration of the above-described problems, and a main object thereof is to provide an injection molding machine capable of suppressing the inclination of the crosshead and damages of the motion conversion mechanism.

### Solution to Problem

In order to achieve the above-described object, according to an aspect of the present invention, there is provided an injection molding machine according to claim 1. In order to achieve the above-described object, according to another aspect of the present invention, there is provided an injection molding machine according to claim 2.

### Advantageous Effects of Invention

According to the aspect of the present invention, there is provided an injection molding machine capable of suppressing an inclination of a crosshead and damages of a motion conversion mechanism.

### Brief Description of Drawings

FIG. 1 is a view showing a state when a mold opening of an injection molding machine according to a first embodiment is completed.
FIG. 2 is a view showing a state when a mold of the injection molding machine according to the first embodiment is clamped.
FIGS. 3A to 3C are views showing a crosshead according to the first embodiment.
FIGS. 4A to 4C are views showing a crosshead according to a first modification example of the first embodiment.
FIGS. 5A and 5B are views showing a crosshead and a toggle support according to a second modification example of the first embodiment.
FIGS. 6A to 6C are views showing a crosshead and a toggle support according to a second embodiment.
FIG. 7 is a view when a mold space adjustment mechanism according to the second embodiment is viewed from behind the toggle support.
FIGS. 8A to 8C are views showing a crosshead and a toggle support according to a modification example of the second embodiment.

### Description of Embodiments

Hereinafter, embodiments will be described with reference to the drawings. The same or corresponding reference numerals are assigned to the same or corresponding constituent elements in each drawing, and descriptions thereof are omitted. In each drawing, an X direction, a Y direction, and a Z direction are directions perpendicular to each other. The X direction indicates mold opening and closing directions. In a case where a mold clamping unit is a horizontal type mold clamping unit, the Z direction indicates an up-down direction and the X direction and the Y direction indicate a horizontal direction.

### First Embodiment

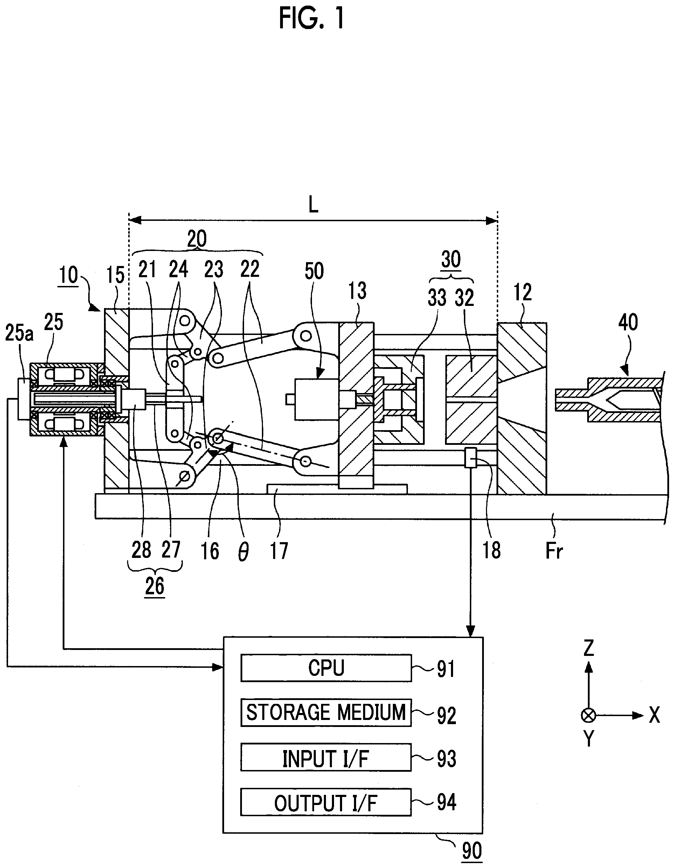

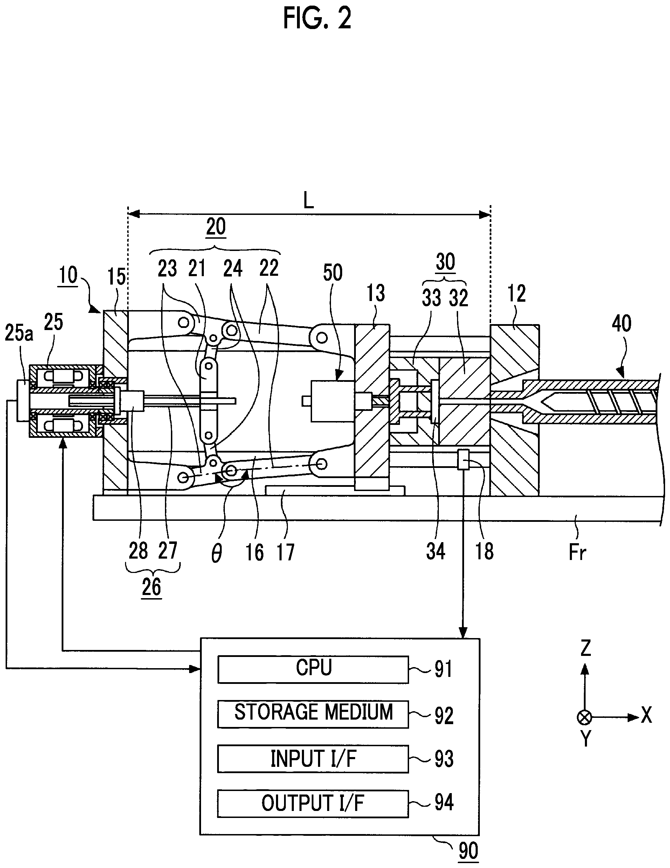

FIG. 1 is a view showing a state when a mold opening of an injection molding machine according to a first embodiment is completed. FIG. 2 is a view showing a state when a mold of the injection molding machine according to the first embodiment is clamped. As shown in FIGS. 1 and 2, the injection molding machine includes a frame Fr, a mold clamping unit 10, an injection unit 40, an ejector unit 50, and a controller 90. In the following descriptions, a movement direction (a right direction in FIGS. 1 and 2) of a movable platen 13 when a mold is closed is referred to a front side, and a movement direction (a left direction in FIGS. 1 and 2) of the movable platen 13 when the mold is opened is referred to a rear side.

The mold clamping unit 10 performs opening, clamping, and opening of the mold unit 30. The mold clamping unit 10 is a horizontal type mold clamping unit in which the mold opening and closing directions are the horizontal direction. The mold clamping unit 10 includes a stationary platen 12, a movable platen 13, a toggle support 15, a tie bar 16, a toggle mechanism 20, a mold clamping motor 25, and a motion conversion mechanism 26.

The stationary platen 12 is fixed to the frame Fr. A stationary mold 32 is attached to a surface of the stationary platen 12 facing the movable platen 13.

The movable platen 13 is movable along a guide (for example, a guide rail) 17 placed on the frame Fr and is movable forward or rearward with respect to the stationary platen 12. A movable mold 33 is attached to a surface of the movable platen 13 facing the stationary platen 12.

The movable platen 13 moves forward or rearward with respect to the stationary platen 12, and thus, mold closing, mold clamping, and, mold opening are performed. The mold unit 30 is configured of the stationary mold 32 and the movable mold 33.

The toggle support 15 is connected to the stationary platen 12 at an interval, and is placed on the frame Fr to be movable in mold opening and closing directions . In addition, the toggle support 15 may be movable along a guide which is placed on the frame Fr. The guide of the toggle support 15 may be also used as the guide 17 of the movable platen 13.

Moreover, in the present embodiment, the stationary platen 12 is fixed to the frame Fr, and the toggle support 15 is movable in the mold opening and closing directions with respect to the frame Fr. However, the toggle support 15 may be fixed to the frame Fr, and the stationary platen 12 may be movable in the mold opening and closing directions with respect to the frame Fr.

The stationary platen 12 and the toggle support 15 are connected to each other at an interval by the tie bar 16. A plurality of (for example, four) tie bars 16 may be used. The tie bars 16 are parallel in the mold opening and closing directions and extend according to a mold clamping force . A mold clamping force detector 18 is provided in at least one tie bar 16. The mold clamping force detector 18 detects strain of the tie bar 16 to detect the mold clamping force and sends a signal indicating a detection result to the controller 90.

In addition, the mold clamping force detector 18 is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 16.

The toggle mechanism 20 moves the movable platen 13 with respect to the stationary platen 12. The toggle mechanism 20 is disposed between the movable platen 13 and the toggle support 15. The toggle mechanism 20 is configured of a crosshead 21, a pair of link groups, or the like. Each link group includes a first link 22 and a second link 23 which are bendably/strechably connected to each other by pins or the like. The first link 22 is attached to the movable platen 13 so as to be oscillated by pins or like and the second link 23 is attached to the toggle support 15 so as to be oscillated by pins or the like. The second link 23 is coupled to the crosshead 21 via a third link 24. If the crosshead 21 moves forward or rearward, the first link 22 and the second link 23 are bent and stretched and the movable platen 13 moves forward or rearward with respect to the toggle support 15.

In addition, the configuration of the toggle mechanism 20 is not limited to the configuration shown in FIGS. 1 and 2. For example, in FIGS. 1 and 2, the number of nodes is five. However, the number of nodes may be four, and one end portion of the third link 24 may be coupled to a node between the first link 22 and the second link 23.

The mold clamping motor 25 is attached to the toggle support 15 and operates the toggle mechanism 20. The mold clamping motor 25 moves the crosshead 21 forward or rearward, and thus, the first links 22 and the second links 23 are bent and stretched, and the movable platen 13 moves forward or rearward.

The motion conversion mechanism 26 converts a rotary motion of the mold clamping motor 25 into a linear motion of the crosshead 21. The motion conversion mechanism 26 includes a screw shaft 27 and a screw nut 28 which is screwed to the screw shaft 27. A ball or a roller may be interposed between the screw shaft 27 and the screw nut 28.

The screw nut 28 is rotatably supported by the toggle support 15 and rotates together with an output shaft of the mold clamping motor 25. The output shaft of the mold clamping motor 25 is formed in a cylindrical shape, and one end portion of the screw shaft 27 is inserted into the inside of the output shaft. The other end portion of the screw shaft 27 is fixed to the crosshead 21. If the mold clamping motor 25 is driven to rotate the output shaft, the screw nut 28 rotates, the screw shaft 27 moves forward or rearward, and thus, the crosshead 21 moves forward or rearward.

In addition, the disposition between the screw shaft 27 and the screw nut 28 is not limited to the above-described disposition. For example, as the disposition between the screw shaft 27 and the screw nut 28, there are the following disposition (1) and the following disposition (2) in addition to the above-described disposition.

(1) The screw nut 28 may be fixed to the toggle support 15, one end portion of the screw shaft 27 may be spline-coupled to the output shaft of the mold clamping motor 25, and the other end portion of the screw shaft 27 may be rotatably supported by a bearing which is held by the crosshead 21. In this case, if the mold clamping motor 25 is driven to rotate the output shaft, the screw shaft 27 moves forward while being rotated, and thus, the crosshead 21 moves forward or rearward.
(2) One end of the screw shaft 27 may be fixed to the output shaft of the mold clamping motor 25 by a bolt or the like, the other end of the screw shaft 27 may be screwed to the screw nut 28, and the screw nut 28 may be attached to the crosshead 21. In this case, if the mold clamping motor 25 is driven to rotate the output shaft, the screw shaft 27 rotates, the screw nut 28 moves forward or rearward, and thus, the crosshead 21 moves forward or rearward.

The operation of the mold clamping unit 10 is controlled by the controller 90. As shown in FIG. 1 or 2, the controller 90 includes a Central Processing Unit (CPU) 91, a storage medium 92 such as a memory, an input interface 93, and an output interface 94. The controller 90 performs various controls by causing the CPU 91 to execute a program stored in the storage medium 92. In addition, the controller 90 receives a signal from the outside through the input interface 93 and transmits a signal to the outside through the output interface 94. The controller 90 controls a mold closing process, a mold clamping process, a mold opening process, or the like.

In the mold closing process, the mold clamping motor 25 is driven to move the crosshead 21 forward to a mold closing completion position at a set speed. Accordingly, the movable platen 13 moves forward and the movable mold 33 comes into contact with the stationary mold 32. For example, a position or speed of the crosshead 21 is detected using an encoder 25a of the mold clamping motor 25 or the like. The encoder 25a detects the rotation of the mold clamping motor 25 and sends signals indicating the detection results to the controller 90.

In the mold clamping process, the mold clamping motor 25 is further driven to further move the crosshead 21 forward from the mold closing completion position to a mold clamping position, and thus, a mold clamping force is generated. When the mold is clamped, a cavity space 34 is formed between the movable mold 33 and the stationary mold 32, and the cavity space 34 is filled with a liquid molding material by the injection unit 40. A filled molding material is solidified, and thus, a molding product is obtained. A plurality of cavity spaces 34 may be provided, and in this case, a plurality of molding products may be simultaneously obtained.

In the mold opening process, the mold clamping motor 25 is driven to move the crosshead 21 rearward to a mold opening completion position at a set speed. Accordingly, the movable platen 13 moves rearward, and the movable mold 33 is separated from the stationary mold 32. Thereafter, the ejector unit 50 causes the molding product to protrude from the movable mold 33.

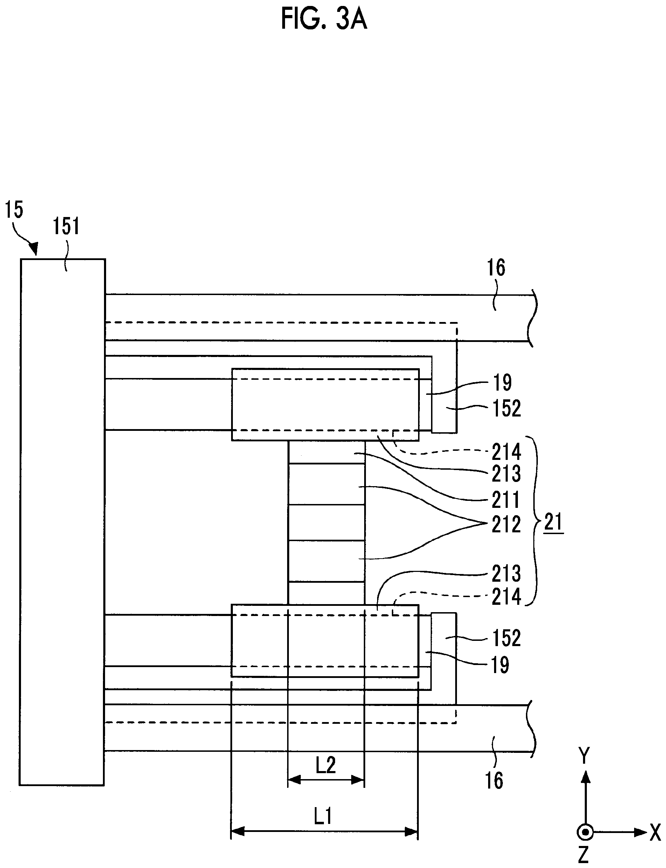

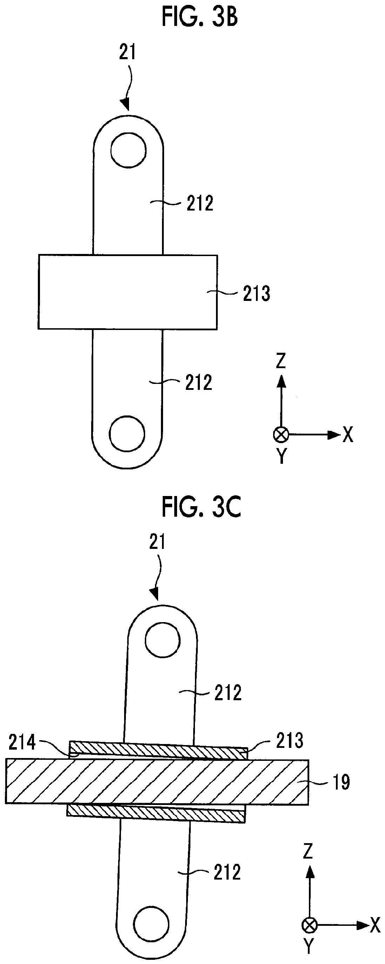

FIGS. 3A to 3C are views showing a crosshead according to the first embodiment. FIG. 3A is a view when the crosshead and the toggle support according to the first embodiment are viewed from above. FIG. 3B is a view when the crosshead according to the first embodiment is viewed from a side. FIG. 3C is a sectional view showing a state where an inclination of the crosshead according to the first embodiment is suppressed by a guide.

The mold clamping unit 10 includes a guide 19 which guides the crosshead 21. A guide direction is the X direction. In order to suppress deflection of the guide 19, both end portions of the guide 19 may be fixed to the toggle support 15 or the like.

As shown in FIGS. 3A, the toggle support 15 includes a toggle support body portion 151 and arm portions 152 which extend forward from the toggle support body portion 151 and are bent in the Y direction in the way. The toggle support body portion 151 and the arm portions 152 are integrally molded with each other by casting or the like. A rear end portion of the guide 19 is fixed to the toggle support body portion 151, and a front end portion of the guide 19 is fixed to a tip portion of the arm portion 152.

The toggle support body portion 151 has a plate-shaped portion which is formed in an approximately rectangular shape when viewed in the X direction. The plate-shaped portion has a through-hole, into which the screw shaft 27 of the motion conversion mechanism 26 is inserted, in a center portion of the plate-shaped portion. In addition, the toggle support body portion 151 may have a tubular portion which protrudes from an outer peripheral edge portion of the plate-shaped portion in one direction (front side) in the X direction, in addition to the plate-shaped portion. The tubular portion is formed in a rectangular frame shape when viewed in the X direction, and forms a space, in which the crosshead 21 moves, inside the rectangular frame.

A pair of arm portions 152 is provided at an interval in the Y direction at a center portion of a surface (front surface) of the toggle support body portion 151 facing the movable platen 13 in the Z direction. The pair of arm portions 152 is provided on both end portions of the toggle support body portion 151 in the Y direction. The pair of arm portions 152 extends in the one direction (front side) in the X direction from the toggle support body portion 151, is bent inward to each other in the Y direction in the way, and holds the front end portions of the pair of guides 19 by the tip portions of the arm portions 152. The rear end portion of each guide 19 is held by the toggle support body portion 151. For example, each guide 19 is formed in a columnar shape and extends in the X direction.

The crosshead 21 includes a main body portion 211 to which the motion conversion mechanism 26 is attached, a link coupling portion 212 which extends in the Z direction from the main body portion 211 and is oscillatingly coupled to the third link 24, and a guide insertion portion 213 which extends in the Y direction from the main body portion 211 and into which the guide 19 is inserted. The main body portion 211, the link coupling portion 212, and the guide insertion portion 213 may be integrally molded with each other by casting or the like.

The motion conversion mechanism 26 is attached to the main body portion 211. For example, the screw shaft 27 is fixed to the main body portion 211. For example, the main body portion 211 is formed in a plate shape perpendicular to the X direction and is formed in a rectangular shape when viewed in the X direction. When viewed in the X direction, the motion conversion mechanism 26 is attached to a center portion of the main body portion 211.

As shown in FIG. 3B, the link coupling portion 212 protrudes from the main body portion 211 in the Z direction. The third links 24 are oscillatingly attached to tip portions of the link coupling portion 212 by pins or the like. The link coupling portions 212 may be provided on both sides in the Z direction in a state where the main body portion 211 is interposed therebetween.

The link coupling portion 212 includes a plurality of link attachment plates, which are perpendicular to the Y direction, at intervals in the Y direction. Each link attachment plate extends in the Z direction from both end surfaces of the main body portion 211 in the Z direction. A through-hole penetrating the link attachment plate in the Y direction is formed at the tip portion of each link attachment plate. A pin is inserted into the through-hole, and the third link 24 is oscillatingly coupled to the link coupling portion 212 via the pin.

The guide insertion portion 213 is formed in a tubular shape extending in the X direction, and as shown in FIGS. 3A and 3C, includes a guide insertion hole 214 into which the guide 19 is inserted and slides along the guide 19. The guide insertion portions 213 are provided on both sides of the main body portion 211 in the Y direction in a state where the main body portion 211 is interposed therebetween. The guide insertion portion 213 is provided at a center portion in the Z direction of both end surfaces of the main body portion 211 in the Y direction.

Meanwhile, a moment around the Y axis acts on the crosshead 21 when the mold is clamped due to unbalance or the like of the pair of third links 24. As a reason why the pair of third links 24 is unbalanced, there is (1) a pitch error of a pin hole of the third link 24, (2) a displacement of a pin hole of the toggle support 15, (3) an inclination of the stationary platen 12, (4) an inclination of the toggle support 15, (5) wear of a pin inserted into the pin hole, or the like.

In the present embodiment, an X direction dimension L1 of the guide insertion portion 213 is longer than an X direction dimension L2 of the main body portion 211. Compared to a case where L1 is the same as L2, L1 is longer than L2, and thus, an inclination of the guide insertion portion 213 with respect to the guide 19 can be suppressed, and an inclination of the main body portion 211 can be suppressed. Accordingly, the deflection of the motion conversion mechanism 26 attached to the main body portion 211 can be suppressed, and damages caused by an unbalanced load of the motion conversion mechanism 26 can be suppressed.

The X direction dimension L1 of the guide insertion portion 213 is set such that the inclination of the guide insertion portion 213 falls within a predetermined allowable range and a deflection amount of the screw shaft 27 of the motion conversion mechanism 26 falls within a predetermined allowable range. The inclination of the guide insertion portion 213 is inversely proportional to the X direction dimension L1 of the guide insertion portion 213, and is proportion to a difference between a diameter of the guide insertion hole 214 and a diameter of the guide 19.

For example, the X direction dimension L1 of the guide insertion portion 213 is set such that the inclination of the front end portion of the screw shaft 27 with respect to the screw nut 28 falls within a predetermined allowable range. That is, the X direction dimension L1 of the guide insertion portion 213 such that an inclination between an axial one end portion of the screw shaft 27 and the axial other end portion of the screw shaft 27 falls within a predetermined allowable range.

Disposition of the guide insertion portion 213 may be determined such that a magnitude of a moment around the Y axis of the crosshead 21 having an X direction center position of the guide insertion portion 213 as a rotation center is minimized. A load applied to the guide insertion portion 213 can be reduced. The guide insertion portion 213 protrudes from the main body portion 211 toward both sides in the X direction. However, the guide insertion portion 213 may protrude from the main body portion 211 toward only one side in the X direction.

### First Modification Example of First Embodiment

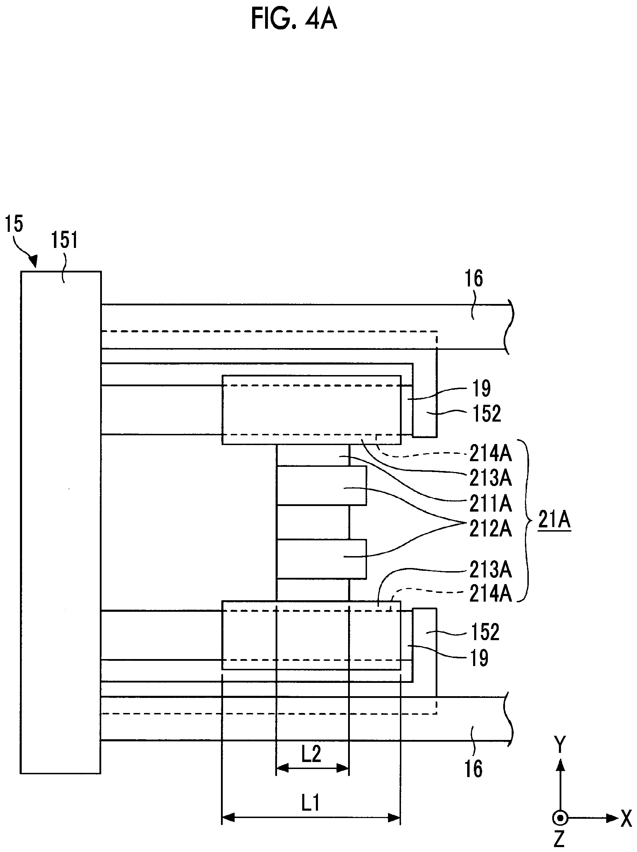

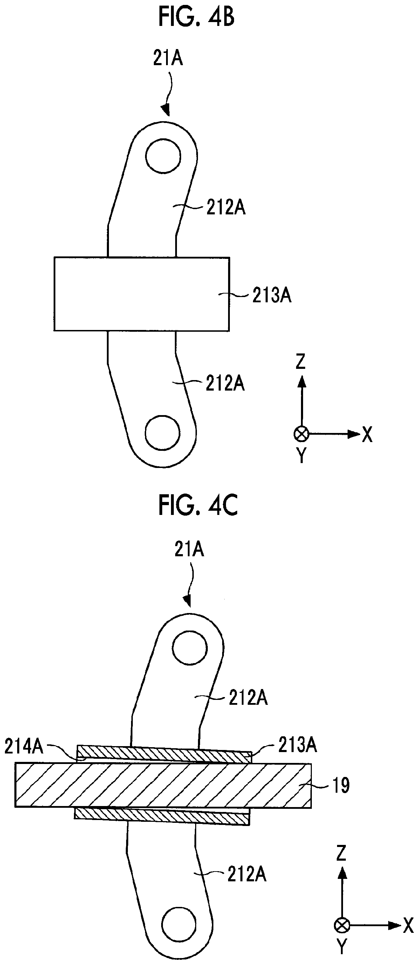

FIGS. 4A to 4C are views showing a crosshead according to a first modification example of the first embodiment. FIG. 4A is a view when the crosshead and the toggle support according to the first modification example of the first embodiment are viewed from above. FIG. 4B is a view when the crosshead according to the first modification example of the first embodiment is viewed from a side. FIG. 4C is a sectional view showing a state where an inclination of the crosshead according to the first modification example of the first embodiment is suppressed by a guide.

A crosshead 21A includes a main body portion 211A to which the motion conversion mechanism 26 is attached, a link coupling portion 212A which extends in the Z direction from the main body portion 211A and is oscillatingly coupled to the third link 24, and a guide insertion portion 213A which extends in the Y direction from the main body portion 211A and into which the guide 19 is inserted. The guide insertion portion 213A includes a guide insertion hole 214A into which the guide 19 is inserted and slides along the guide 19. Hereinafter, differences between the crosshead 21 shown in FIGS. 3A to 3C or the like and the crosshead 21A will be mainly described.

The motion conversion mechanism 26 is attached to the main body portion 211A. For example, the screw shaft 27 is fixed to the main body portion 211A. For example, the main body portion 211A is formed in a plate shape perpendicular to the X direction and is formed in a rectangular shape when viewed in the X direction. When viewed in the X direction, the motion conversion mechanism 26 is attached to a center portion of the main body portion 211A.

As shown in FIG. 4B, the link coupling portion 212A protrudes in the Z direction from the main body portion 211, and further protrudes toward the one side (front side) in the X direction than the main body portion 211 and is inclined. The third links 24 are oscillatingly attached to tip portions of the link coupling portion 212A by pins or the like. As shown in FIG. 4B, the link coupling portions 212A may be provided on both sides in the Z direction in a state where the main body portion 211 is interposed therebetween.

The link coupling portion 212A includes a plurality of link attachment plates, which are perpendicular to the Y direction, at intervals in the Y direction. Each link attachment plate extends in the Z direction from both end surfaces of the main body portion 211A in the Z direction, is inclined in one direction (for example, front side) in the X direction in the way, and may further protrude in the one direction in the X direction than the main body portion 211A. A through-hole penetrating the link attachment plate in the Y direction is formed at the tip portion of each link attachment plate. A pin is inserted into the through-hole, and thus, the third link 24 is oscillatingly coupled to the link coupling portion 212A via the pin.

The guide insertion portion 213A is formed in a tubular shape extending in the X direction, and as shown in FIGS. 4A and 4C, includes a guide insertion hole 214A into which the guide 19 is inserted and slides along the guide 19. The guide insertion portions 213A further protrudes from the main body portion 211 toward the one side (front side) in the X direction than the link coupling portion 212A. Accordingly, balance is improved. The guide insertion portions 213A are provided on both sides of the main body portion 211 in the Y direction in a state where the main body portion 211 is interposed therebetween. The guide insertion portion 213A is provided at a center portion in the Z direction of both end surfaces of the main body portion 211A in the Y direction.

### Second Modification Example of First Embodiment

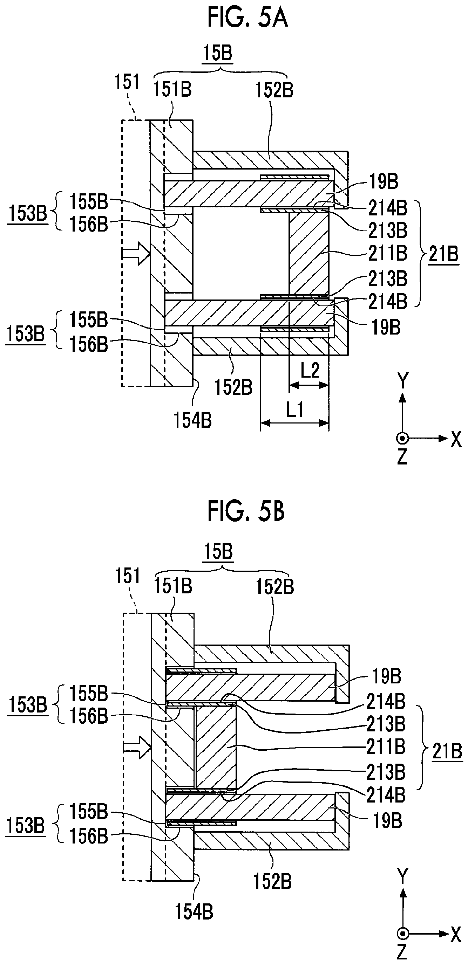

FIGS. 5A and 5B are sectional views showing a crosshead and a toggle support according to a second modification example of the first embodiment. FIG. 5A is a view showing states of the crosshead and the toggle support according to the second modification example of the first embodiment when the mold is clamped. FIG. 5B is a view showing states of the crosshead and the toggle support according to the second modification example of the first embodiment when the mold opening is completed. Hereinafter, differences between the first embodiment and the second modification example of the first embodiment will be mainly described. In FIGS. 5A and 5B, the position of the toggle support body portion 151 of the first embodiment is shown by two-dot chain lines.

A toggle support 15B includes a toggle support body portion 151B and arm portions 152B which extend forward from the toggle support body portion 151B and are bent in the Y direction in the way. A rear end portion of a guide 19B is fixed to the toggle support body portion 151B, and a front end portion of the guide 19B is fixed to a tip portion of the arm portion 152B.

The toggle support body portion 151B has a plate-shaped portion which is formed in an approximately rectangular shape when viewed in the X direction. The plate-shaped portion has a through-hole, into which the screw shaft 27 of the motion conversion mechanism 26 is inserted, in a center portion of the plate-shaped portion. In addition, the toggle support body portion 151B may have a tubular portion which protrudes from an outer peripheral edge portion of the plate-shaped portion in one direction (front side) in the X direction, in addition to the plate-shaped portion. The tubular portion is formed in a rectangular frame shape when viewed in the X direction, and forms a space, in which a crosshead 21B moves, inside the rectangular frame.

A pair of arm portions 152B is provided at an interval in the Y direction at a center portion of a surface (front surface) of the toggle support body portion 151B facing the movable platen 13 in the Z direction. The pair of arm portions 152B is provided on both end portions of the toggle support body portion 151B in the Y direction. The pair of arm portions 152B extends in the one direction (front side) in the X direction from the toggle support body portion 151B, is bent inward to each other in the Y direction in the way, and holds the front ends of the pair of guides 19B by the tip portions of the arm portions 152B. The rear end portion of each guide 19B is held by the toggle support body portion 151B. For example, each guide 19B is formed in a columnar shape and extends in the X direction.

The crosshead 21B includes a main body portion 211B to which the motion conversion mechanism 26 (refer to FIG. 1 or the like) is attached, a link coupling portion which extends in the Z direction from the main body portion 211B and is oscillatingly coupled to the third link 24 (refer to FIG. 1 or the like), and a guide insertion portion 213B which extends in the Y direction from the main body portion 211B and into which the guide 19B is inserted.

The motion conversion mechanism 26 is attached to the main body portion 211B. For example, the screw shaft 27 is fixed to the main body portion 211B. For example, the main body portion 211B is formed in a plate shape perpendicular to the X direction and is formed in a rectangular shape when viewed in the X direction. When viewed in the X direction, the motion conversion mechanism 26 is attached to a center portion of the main body portion 211B.

The link coupling portion includes a plurality of link attachment plates, which are perpendicular to the Y direction, at intervals in the Y direction. Each link attachment plate extends in the Z direction from both end surfaces of the main body portion 211B in the Z direction. Each link attachment plate extends in the Z direction from both end surfaces of the main body portion 211B in the Z direction, may be inclined in one direction (for example, front side) in the X direction in the way, and may further protrude in the one direction in the X direction than the main body portion 211B. A through-hole penetrating the link attachment plate in the Y direction is formed at the tip portion of each link attachment plate. A pin is inserted into the through-hole, and thus, the third link 24 is oscillatingly coupled to the link coupling portion via the pin.

The guide insertion portion 213B is formed in a tubular shape extending in the X direction, includes a guide insertion hole 214B into which the guide 19B is inserted, and slides along the guide 19B. The guide insertion portions 213B are provided on both sides of the main body portion 211B in the Y direction in a state where the main body portion 211B is interposed therebetween and are provided at a center portion in the Z direction of both end surfaces of the main body portion 211B in the Y direction.

In order to suppress an inclination of the crosshead 21B, the guide insertion portion 213B protrudes toward the toggle support body portion 151B side (rear side) based on the main body portion 211B. The guide insertion portion 213B may protrude toward a side (front side) opposite to the toggle support body portion 151B based on the main body portion 211. However, as shown in FIGS. 5A and 5B, the guide insertion portion 213B may not protrude toward the front side.

An X direction dimension L1 of the guide insertion portion 213B is longer than an X direction dimension L2 of the main body portion 211B. Accordingly, compared to a case where L1 is the same as L2, an inclination of the guide insertion portion 213B with respect to the guide 19B can be suppressed, and an inclination of the main body portion 211B can be suppressed. Therefore, the deflection of the motion conversion mechanism 26 attached to the main body portion 211B can be suppressed, and damages caused by an unbalanced load of the motion conversion mechanism 26 can be suppressed.

For example, the X direction dimension L1 of the guide insertion portion 213B is set such that the inclination of the front end portion of the screw shaft 27 with respect to the screw nut 28 falls within a predetermined allowable range. That is, the X direction dimension L1 of the guide insertion portion 213B such that an inclination between an axial one end portion of the screw shaft 27 and the axial other end portion of the screw shaft 27 falls within a predetermined allowable range.

A plate-shaped portion of the toggle support body portion 151B has an insertion portion 153B into which the guide insertion portion 213B is inserted. In FIGS. 5A and 5B, a pair of insertion portions 153B are provided at an interval in the Y direction, and different guide insertion portions 213B are inserted into respective insertion portions 153B. However, the plurality of guide insertion portions 213B may be inserted into one insertion portion.

For example, the insertion portion 153B is formed to recessed on a facing surface 154B of a plate-shaped portion of the toggle support body portion 151B facing the crosshead 21B, and includes a guide attachment surface 155B which is offset rearward from the facing surface 154B. A rear end portion of the guide 19B is fixed to the guide attachment surface 155B. A step surface 156B is formed between the guide attachment surface 155B and the facing surface 154B.

In a case where X direction movable ranges of the crossheads 21B are the same as each other, the insertion portions 153B are provided in the toggle support body portion 151B. Accordingly, as shown by arrows in FIGS. 5A and 5B, a position of the toggle support body portion 151B can be displaced forward. Accordingly, an interval L (refer to FIGS. 1 and 2) between the toggle support body portion 151B and the stationary platen 12 can be shortened, and thus, a dimension of the mold clamping unit in the X direction can be shortened.

The guide insertion portion 213B is inserted into the insertion portion 153B and does not protrude forward based on the main body portion 211. Accordingly, the X direction movable range of the crosshead 21B is determined by an X direction movable range of the main body portion 211B. Therefore, the X direction dimension L1 of the guide insertion portion 213B being longer than the X direction dimension L2 of the main body portion 211B can suppress an expansion of the X direction dimension of the mold clamping unit caused by, and thus, it is possible to suppress the expansion in the X direction of the mold clamping unit.

### Second Embodiment

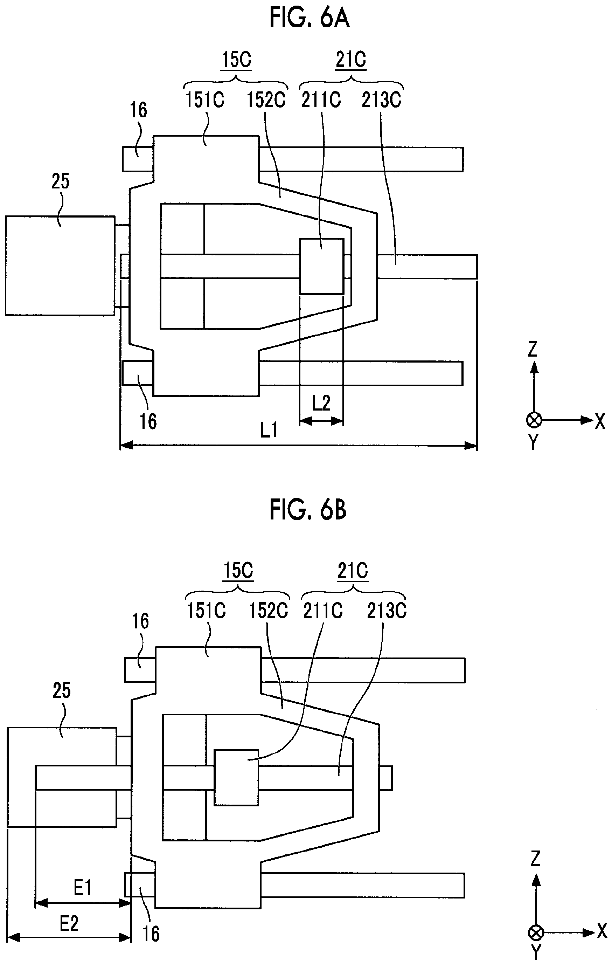

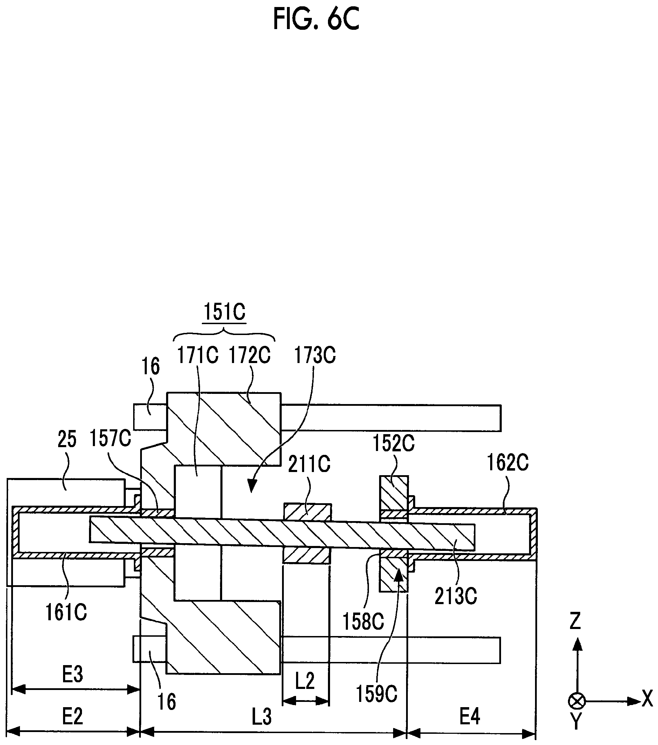

FIGS. 6A to 6C are views showing a crosshead and a toggle support according to a second embodiment. FIG. 6A is a view showing states of the crosshead and the toggle support according to the second embodiment when the mold is clamped. FIG. 6B is a view showing states of the crosshead and the toggle support according to the second embodiment when the mold opening is completed. FIG. 6C is a view showing a sectional view showing a state where an inclination of the crosshead according to the second embodiment is suppressed by a guide. In FIGS. 6A and 6B, a rear cover 161C and a front cover 162C shown in FIG. 6C are omitted.

A toggle support 15C includes a toggle support body portion 151C and arm portions 152C which extend forward from the toggle support body portion 151C and are bent in the Y direction in the way. The toggle support body portion 151C and the arm portions 152C are integrally molded with each other by casting or the like. Similar to the first embodiment, a pair of (only one is shown in FIGS. 6A to 6C) arm portions 152C are provided at an interval in the Y direction.

The toggle support body portion 151C includes a plate-shaped portion 171C which is formed in an approximately rectangular shape when viewed in the X direction and a tubular portion 172C which protrudes from an outer peripheral edge portion of the plate-shaped portion 171C in the one direction (front side) in the X direction. The plate-shaped portion 171C has a through-hole, into which the screw shaft 27 of the motion conversion mechanism 26 is inserted, in a center portion of the plate-shaped portion 171C. The tubular portion 172C is formed in a rectangular frame shape when viewed in the X direction, and forms a space 173C, in which a main body portion 211C of a crosshead 21C moves, inside the rectangular frame.

The pair of arm portions 152C is provided at an interval in the Y direction at a center portion of a surface (front surface) of the toggle support body portion 151C (more specifically, tubular portion 172C) facing the movable platen 13 in the Z direction. The pair of arm portions 152C is provided on both end portions of the toggle support body portion 151C in the Y direction. The pair of arm portions 152C extends in the one direction (front side) in the X direction from the toggle support body portion 151C and is bent inward to each other in the Y direction in the way.

The crosshead 21C includes a main body portion 211C to which the motion conversion mechanism 26 (refer to FIG. 1 or the like) is attached, a link coupling portion which extends in the Z direction from the main body portion 211C and is oscillatingly coupled to the third link 24 (refer to FIG. 1 or the like), and a shaft portion 213C serving as a guided portion which is guided by toggle supports 15C provided on both end portions of the main body portion 211C in the Y direction. The configuration of the link coupling portion of the crosshead 21C is similar to that of the link coupling portion 212 of the first embodiment or the link coupling portion 212A of the first embodiment, and thus, illustration thereof is omitted.

The motion conversion mechanism 26 is attached to the main body portion 211C. For example, the screw shaft 27 is fixed to the main body portion 211C. For example, the main body portion 211C is formed in a plate shape perpendicular to the X direction and is formed in a rectangular shape when viewed in the X direction. When viewed in the X direction, the motion conversion mechanism 26 is attached to a center portion of the main body portion 211C.

The link coupling portion includes a plurality of link attachment plates, which are perpendicular to the Y direction, at intervals in the Y direction. Each link attachment plate extends in the Z direction from both end surfaces of the main body portion 211C in the Z direction. Each link attachment plate extends in the Z direction from both end surfaces of the main body portion 211C in the Z direction, may be inclined in one direction (for example, front side) in the X direction in the way, and may further protrude in the one direction in the X direction than the main body portion 211C. A through-hole penetrating the link attachment plate in the Y direction is formed at the tip portion of each link attachment plate. A pin is inserted into the through-hole, and thus, the third link 24 is oscillatingly coupled to the link coupling portion via the pin.

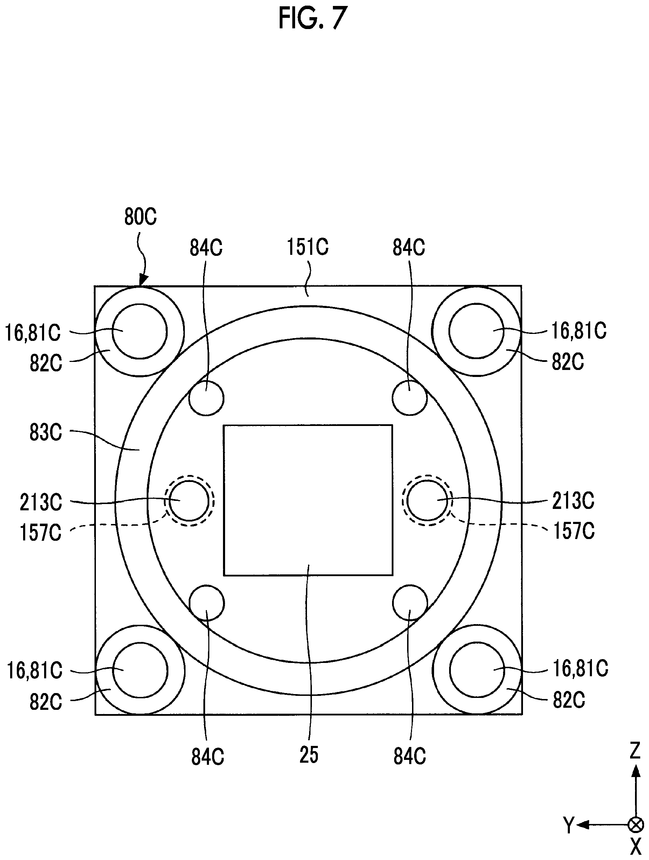

A pair of shaft portions 213C is provided at an interval in the Y direction (refer to FIG. 7). The shaft portions 213C are inserted into through-holes penetrating a center portion in the Z direction of both end portions in the Y direction of the main body portion 211C in the X direction, and are fixed to the main body portion 211C. In FIGS. 6A to 6C, each shaft portion 213C is separately formed from the main body portion 211C and is connected to the main body portion 211C. However, the shaft portion 213C may be integrally formed with the main body portion 211C.

The shaft portion 213C penetrates the toggle support 15C and is guided by a first bearing portion 157C and a second bearing portion 158C which are provided in the toggle support 15C at an interval in the X direction. The first bearing portion 157C is provided in the toggle support body portion 151C, and the second bearing portion 158C is provided on a front end portion of the arm portion 152C.

A guide unit 159C is configured of the first bearing portion 157C and the second bearing portion 158C. In the present embodiment, the first bearing portion 157C and the second bearing portion 158C correspond to a guide described in claims. In addition, the guide unit 159C of the present embodiment is configured of two guides. However, the guide unit 159C may be configured of three or more of guides. In the present embodiment, a cross sectional shape perpendicular to the X direction of the guide is a ring shape. However, the cross sectional shape may be a shape in which a part of the ring is broken, for example, a transverse U shape or the like.

For example, the shaft portion 213C includes a columnar straight shaft. Each of the first bearing portion 157C and the second bearing portion 158C includes a sliding bearing which is in contact with the straight shaft. In addition, similar to a modification example described later, each of the first bearing portion 157C and the second bearing portion 158C may include a rolling bearing. For example, as the rolling bearing, a ball bush which is in contact with the straight shaft is used.

The shaft portion 213C penetrates the first bearing portion 157C and the second bearing portion 158C to extend in the X direction. The first bearing portion 157C is in contact with the shaft portion 213C on one side (rear side) of the main body portion 211C in the X direction and guides the shaft portion 213C. The second bearing portion 158C is in contact with the shaft portion 213C on a side (front side) opposite to the main body portion 211C in the X direction and guides the shaft portion 213C.

An X direction dimension L1 of the shaft portion 213C is longer than the X direction dimension L2 of the main body portion 211C. In addition, an X direction dimension L3 of the guide unit 159C is longer than the X direction dimension L2 of the main body portion 211C.

Here, the X direction dimension L3 of the guide unit 159C is a dimension between a front end of the guide (second bearing portion 158C in FIGS. 6A to 6C) provided on the frontmost side and a rear end of the guide (first bearing portion 157C in FIGS. 6A to 6C) provided on the rearmost side. This is similarly applied to a case where the number of the guides is three or more.

As is clear from FIG. 6C, the inclination of the shaft portion 213C is determined by a radial clearance between the shaft portion 213C and the first bearing portion 157C, a radial clearance between the shaft portion 213C and the second bearing portion 158C, and the X direction dimension L3 of the guide unit 159C, or the like.

In a case where the radial clearance relating to the inclination of the shaft portion 213C is similar to that of the related art, the X direction dimension L3 of the guide unit 159C relating to the inclination of the shaft portion 213C is longer than the X direction dimension L2 of the main body portion 211C, the inclination of the shaft portion 213C can be further suppressed than that in the related art, and the inclination of the main body portion 211C can be further suppressed than that of the related art. Accordingly, the deflection of the motion conversion mechanism 26 attached to the main body portion 211C can be suppressed, and damages caused by an unbalanced load of the motion conversion mechanism 26 can be suppressed.

The X direction dimension L3 of the guide unit 159C is set such that the inclination of the shaft portion 213C falls within a predetermined allowable range and the deflection amount of the screw shaft 27 of the motion conversion mechanism 26 falls within a predetermined allowable range.

For example, the X direction dimension L3 of the guide unit 159C is set such that the inclination of the front end portion of the screw shaft 27 with respect to the screw nut 28 falls within a predetermined allowable range. That is, the X direction dimension L3 of the guide unit 159C such that an inclination between the axial one end portion of the screw shaft 27 and the axial other end portion of the screw shaft 27 falls within a predetermined allowable range.

The shaft portion 213C penetrates the toggle support 15C in the X direction, and the movement of the shaft portion 213C in the X direction is not hindered by the toggle support 15C. Accordingly, the X direction movable range of the crosshead 21C is determined by the X direction movable range of the main body portion 211C. Therefore, the X direction dimension L1 of the shaft portion 213C being longer than the X direction dimension L2 of the main body portion 211C can suppress an expansion of the X direction dimension of the mold clamping unit, and it is possible to suppress the expansion in the X direction of the mold clamping unit.

The shaft portion 213C protrudes rearward from the toggle support body portion 151C, and a protrusion amount become the largest when the mold opening is completed. As shown in FIG. 6B, the maximum protrusion amount E1 is equal to or less than a protrusion amount E2 of the mold clamping motor 25 rearward from the toggle support body portion 151C. Accordingly, it is possible to prevent a front-rear length of the injection molding machine from lengthening.

The shaft portion 213C protrudes rearward from the toggle support body portion 151C, and the rear end portion of the shaft portion 213C behind the toggle support body portion 151C moves in the mold opening and closing directions. Accordingly, in order to prevent a contact between the rear end portion of the shaft portion 213C and a mechanical member or a user, the rear cover 161C may be provided in the toggle support body portion 151C. The rear cover 161C includes a tubular portion surrounding the rear end portion of the shaft portion 213C and a cover portion which covers an opening portion of the tubular portion. A protrusion amount E3 of the rear cover 161C rearward from the toggle support body portion 151C is equal to or less than the protrusion amount E2 of the mold clamping motor 25 rearward from the toggle support body portion 151C. Accordingly, it is possible to prevent the front-rear length of the injection molding machine from lengthening.

In addition, the shaft portion 213C protrudes forward from the arm portion 152C and a protrusion amount of the shaft portion 213C become the largest when the mold is clamped. In the mold closing process or the mold clamping process, the movable platen 13 moves forward, and thus, the shaft portion 213C does not abut against the movable platen 13. In addition, in the mold opening process, the movable platen 13 moves rearward. However the shaft portion 213C moves rearward, and thus, the shaft portion 213C does not hinder the rearward movement of the movable platen 13.

The shaft portion 213C protrudes forward from the arm portion 152C, and the front end portion of the shaft portion 213C in front of the arm portion 152C moves in the mold opening and closing directions. Accordingly, in order to prevent a contact between the front end portion of the shaft portion 213C and the mechanical member or the user, the front cover 162C may be provided in the arm portion 152C. The front cover 162C includes a tubular portion surrounding the front end portion of the shaft portion 213C and a cover portion which covers an opening portion of the tubular portion. A protrusion amount E4 of the front cover 162C forward from the arm portion 152C is set so as not hinder a rearward movement of the movable platen 13.

FIG. 7 is a view when a mold space adjustment mechanism according to the second embodiment is viewed from behind the toggle support. The rear cover 161C shown in FIG. 6C is not shown in FIG. 7. Hereinafter, before a mold space adjustment mechanism 80C is described with reference to FIG. 7, a toggle magnification of the toggle mechanism 20 which is adjusted by the mold space adjustment mechanism 80C will be described with reference to FIGS. 1 and 2.

The toggle mechanism 20 shown in FIGS. 1 and 2 amplifies a driving force of the mold clamping motor 25 and transmits the driving force to the movable platen 13. An amplification magnification of the toggle mechanism 20 is also referred to as a toggle magnification. The toggle magnification is changed according to an angle θ (hereinafter, also referred to a "link angle θ") between the first link 22 and the second link 23. The link angle θ is obtained from the position of the crosshead 21. When the link angle θ is 180°, the toggle magnification becomes largest.

In a case where a space of the mold unit 30 is changed by replacement of the mold unit 30, a temperature change of the mold unit 30, or the like, a mold space adjustment is performed such that a predetermined mold clamping force is obtained when the mold is clamped. For example, in the mold space adjustment, the interval L between the stationary platen 12 and the toggle support 15 (more specifically, toggle support body portion 151) is adjusted such that the link angle θ of the toggle mechanism 20 at the time of a touch type where the movable mold 33 comes into contact with the stationary mold 32 becomes a predetermined angle.

The mold space adjustment mechanism 80C shown in FIG. 7 performs the mold space adjustment by adjusting the interval L between the stationary platen 12 and the toggle support 15C. For example, the mold space adjustment mechanism 80C includes a screw shaft 81C which is formed on a rear end portion of the tie bar 16, a screw nut 82C which is rotatably held by the toggle support body portion 151C, and a drive gear 83C which meshes with a driven gear formed on an outer periphery of the screw nut 82C. In addition, the mold space adjustment mechanism 80C may include a mold space adjustment motor which rotates the drive gear 83C.

The screw shaft 81C and the screw nut 82C are provided for each tie bar 16. A plurality of the screw shafts 81C and a plurality of the screw nuts 82C are provided according to the plurality of tie bars 16. The plurality of driven gears formed on the plurality of screw nuts 82C circumscribe the drive gear 83C, and the drive gear 83C is rotatably held by the toggle support body portion 151C. The drive gear 83C is formed in a ring shape, and a plurality of rollers 84C inscribing the drive gear 83C is rotatably held by the toggle support body portion 151C.

The mold space adjustment motor is driven and the drive gear 83C is rotated. Accordingly, the plurality of screw nuts 82C are synchronously rotated, a position of the toggle support 15C rotatably holding each screw nut 82C with respect to the stationary platen 12 is adjusted, and thus, the interval between the stationary platen 12 and the toggle support 15C is adjusted. The interval L is detected using a mold space adjustment motor encoder. The mold space adjustment motor encoder detects a rotation amount or a rotation direction of the mold space adjustment motor and sends a signal indicating the detection result to the controller 90. The detection result of the mold space adjustment motor encoder is used to monitor or control the position of the toggle support 15C or the interval L.

Meanwhile, in the present embodiment, the shaft portion 213C of the crosshead 21C penetrates the toggle support body portion 151C.

The shaft portion 213C of the crosshead 21C may be disposed inside the drive gear 83C when viewed in the mold opening and closing directions. An inner diameter of the drive gear 83C is set such that the shaft portion 213C of the crosshead 21C is disposed inside the drive gear 83C.

### Modification Example of Second Embodiment

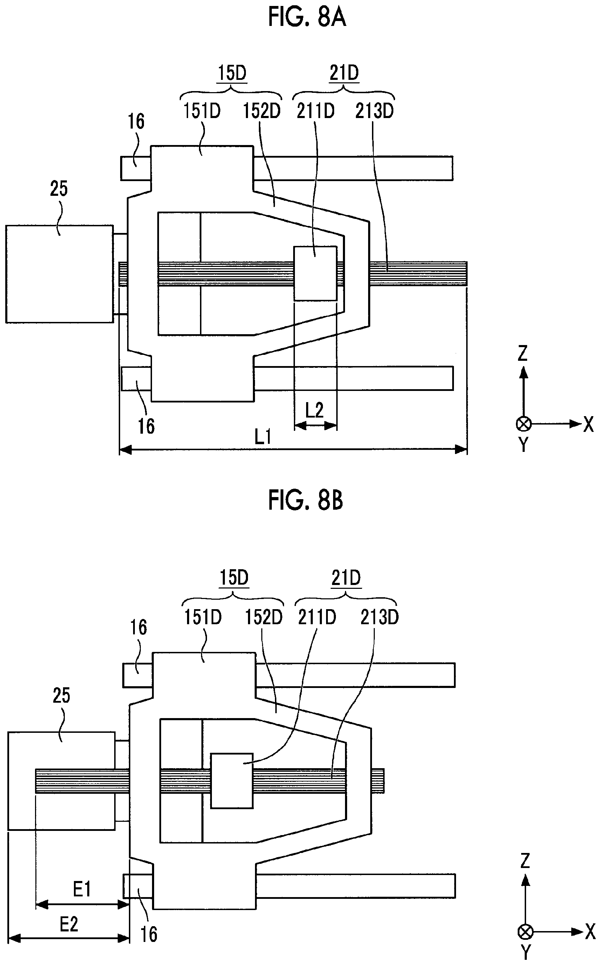

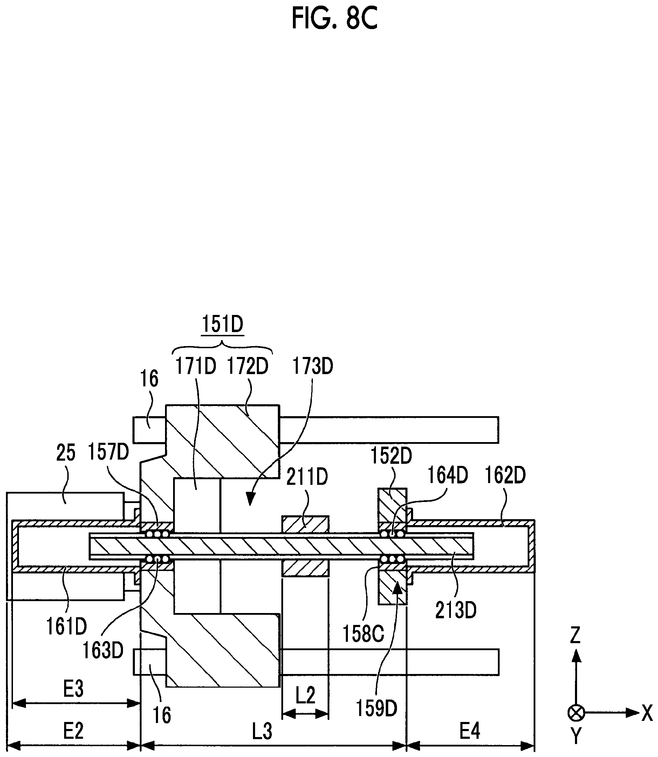

FIGS. 8A to 8C are views showing a crosshead and a toggle support according to a modification example of the second embodiment. FIG. 8A is a view showing states of the crosshead and the toggle support according to the modification example of the second embodiment when the mold is clamped. FIG. 8B is a view showing states of the crosshead and the toggle support according to the modification example of the second embodiment when the mold opening is completed. FIG. 8C is a view showing a sectional view showing a state where an inclination of the crosshead according to the modification example of the second embodiment is suppressed by a guide. In FIGS. 8A and 8B, a rear cover 161D and a front cover 162D shown in FIG. 8C are omitted. Hereinafter, differences between the modification example of the second embodiment and the second embodiment will be mainly described.

A toggle support 15D includes a toggle support body portion 151D and arm portions 152D which extend forward from the toggle support body portion 151D and are bent in the Y direction in the way. The toggle support body portion 151D and the arm portions 152D are integrally molded with each other by casting or the like. Similar to the first embodiment, a pair of (only one is shown in FIGS. 8A to 8C) arm portions 152D are provided at an interval in the Y direction.

The toggle support body portion 151D includes a plate-shaped portion 171D which is formed in an approximately rectangular shape when viewed in the X direction and a tubular portion 172D which protrudes from an outer peripheral edge portion of the plate-shaped portion 171D in the one direction (front side) in the X direction. The plate-shaped portion 171D has a through-hole, into which the screw shaft 27 of the motion conversion mechanism 26 is inserted, in a center portion of the plate-shaped portion 171D. The tubular portion 172D is formed in a rectangular frame shape when viewed in the X direction, and forms a space 173D, in which a main body portion 211D of a crosshead 21D moves, inside the rectangular frame.

The pair of arm portions 152D is provided at an interval in the Y direction at a center portion of a surface (front surface) of the toggle support body portion 151D (more specifically, tubular portion 172D) facing the movable platen 13 in the Z direction. The pair of arm portions 152D extends in the one direction (front side) in the X direction from the toggle support body portion 151D and is bent inward to each other in the Y direction in the way.

The crosshead 21D includes a main body portion 211D to which the motion conversion mechanism 26 (refer to FIG. 1 or the like) is attached, a link coupling portion which extends in the Z direction from the main body portion 211D and is oscillatingly coupled to the third link 24 (refer to FIG. 1 or the like), and a shaft portion 213D serving as a guided portion which is guided by toggle supports 15D provided on both end portions of the main body portion 211D in the Y direction. The configuration of the link coupling portion of the crosshead 21D is similar to that of the link coupling portion 212 of the first embodiment or the link coupling portion 212A of the first embodiment, and thus, illustration thereof is omitted.

The motion conversion mechanism 26 is attached to the main body portion 211D. For example, the screw shaft 27 is fixed to the main body portion 211D. For example, the main body portion 211D is formed in a plate shape perpendicular to the X direction and is formed in a rectangular shape when viewed in the X direction. The motion conversion mechanism 26 is attached to a center portion of the main body portion 211D.

The link coupling portion includes a plurality of link attachment plates, which are perpendicular to the Y direction, at intervals in the Y direction. Each link attachment plate extends in the Z direction from both end surfaces of the main body portion 211D in the Z direction. Each link attachment plate extends in the Z direction from both end surfaces of the main body portion 211D in the Z direction, may be inclined in one direction (for example, front side) in the X direction in the way, and may further protrude in the one direction in the X direction than the main body portion 211D. A through-hole penetrating the link attachment plate in the Y direction is formed at the tip portion of each link attachment plate. A pin is inserted into the through-hole, and thus, the third link 24 is oscillatingly coupled to the link coupling portion via the pin.

A pair of shaft portions 213D is provided at an interval in the Y direction. The shaft portions 213D are inserted into through-holes penetrating a center portion in the Z direction of both end portions in the Y direction of the main body portion 211D in the X direction, and are fixed to the main body portion 211D. In FIGS. 8A to 8C, each shaft portion 213D is separately formed from the main body portion 211D and is connected to the main body portion 211D. However, the shaft portion 213D may be integrally formed with the main body portion 211D.

The shaft portion 213D penetrates the toggle support 15D and is guided by a first bearing portion 157D and a second bearing portion 158D which are provided in the toggle support 15D at an interval in the X direction. The first bearing portion 157D is provided in the toggle support body portion 151D, and the second bearing portion 158D is provided on a front end portion of the arm portion 152D.

A guide unit 159D is configured of the first bearing portion 157D and the second bearing portion 158D. In the present modification example, the first bearing portion 157D and the second bearing portion 158D correspond to a guide described in claims. In addition, the guide unit 159D of the present modification example is configured of two guides. However, the guide unit 159D may be configured of three or more of guides. In the present modification example, a cross sectional shape perpendicular to the X direction of the guide is a ring shape. However, the cross sectional shape may be a shape in which a part of the ring is broken, for example, a transverse U shape or the like.

For example, the shaft portion 213D includes a ball spline shaft. Each of the first bearing portion 157D and the second bearing portion 158D includes a ball spline bearing which is in contact with the ball spline shaft. The ball spline bearing is a type of rolling bearing and includes balls 163D and 164D serving rolling elements. In addition, the rolling bearing may include a roller serving as the rolling element. The rolling bearing may include a circulation path, through which the plurality of rolling elements circulate, inside the rolling bearing.

The shaft portion 213D penetrates the first bearing portion 157D and the second bearing portion 158D to extend in the X direction. The first bearing portion 157D is in contact with the shaft portion 213D on one side (rear side) of the main body portion 211D in the X direction and guides the shaft portion 213D. The second bearing portion 158D is in contact with the shaft portion 213D on a side (front side) opposite to the main body portion 211D in the X direction and guides the shaft portion 213D.

An X direction dimension L1 of the shaft portion 213D is longer than the X direction dimension L2 of the main body portion 211D. In addition, an X direction dimension L3 of the guide unit 159D is longer than the X direction dimension L2 of the main body portion 211B.

Here, the X direction dimension L3 of the guide unit 159D is a dimension between a front end of the guide (second bearing portion 158D in FIGS. 8A to 8C) provided on the frontmost side and a rear end of the guide (first bearing portion 157D in FIGS. 8A to 8C) provided on the rearmost side. This is similarly applied to a case where the number of the guides is three or more.

As is clear from FIG. 8C, the inclination of the shaft portion 213D is determined by a radial clearance between the shaft portion 213D and the first bearing portion 157D, a radial clearance between the shaft portion 213D and the second bearing portion 158D, the X direction dimension L3 of the guide unit 159D, or the like.

Similar to the second embodiment, according to the present modification example, the X direction dimension L3 of the guide unit 159D is longer than the X direction dimension L2 of the main body portion 211D. In addition, according to the present modification example, the first bearing portion 157D and the second bearing portion 158D are rolling bearings, and thus, as shown in FIG. 8C, radial clearances between the first bearing portion 157D and the second bearing portion 158D, and the shaft portion 213D can decrease. By causing the rolling elements of the rolling bearing to roll, the shaft portion 213D can be inserted into the first bearing portion 157D and the second bearing portion 158D.

According to the present modification example, the radial clearance relating to the inclination of the shaft portion 213D can decrease, and thus, the inclination of the shaft portion 213D can be further suppressed, and the inclination of the main body portion 211D can be further suppressed. Accordingly, the deflection of the motion conversion mechanism 26 attached to the main body portion 211D can be further suppressed, and damages caused by an unbalanced load of the motion conversion mechanism 26 can be suppressed.

The shaft portion 213D protrudes rearward from the toggle support body portion 151D, and the rear end portion of the shaft portion 213D behind the toggle support body portion 151D moves in the mold opening and closing directions. Accordingly, in order to prevent a contact between the rear end portion of the shaft portion 213D and a mechanical member or a user, the rear cover 161D may be provided in the toggle support body portion 151D.

In addition, the shaft portion 213D protrudes forward from the arm portion 152D, and the front end portion of the shaft portion 213D in front of the arm portion 152D moves in the mold opening and closing directions. Accordingly, in order to prevent a contact between the front end portion of the shaft portion 213D and the mechanical member or the user, the front cover 162D may be provided in the arm portion 152D.

### Modification and Improvement

Hereinbefore, the embodiments or the like of the injection molding machine are described. However, the present invention is not limited to the above-described embodiments or the like, and various modifications and improvements are possible within a scope of the gist of the present invention described in claims.

In the above-described embodiments, a horizontal mold clamping unit in which the mold opening and closing directions are the horizontal direction is used as the mold clamping unit 10. However, a vertical mold clamping unit in which the mold opening and closing directions are the up-down direction may be used as the mold clamping unit. The vertical mold clamping unit includes a lower platen, an upper platen, a toggle support, a toggle mechanism, a tie bar, or the like. Either the lower platen or the upper platen is used as the stationary platen, and the other is used as the movable platen. A lower mold is attached to the lower platen, and an upper mold is attached to the upper platen. The mold unit is configured of the lower mold and the upper mold. The lower mold may be attached to the lower platen via a rotary table. The toggle support is disposed below the lower platen. The toggle mechanism is disposed between the toggle support and the lower platen. The tie bar is parallel in a vertical direction, penetrates the lower platen, and connects the upper platen and the toggle support to each other.

The toggle mechanism 20 of each of the above-described embodiments is applied to the mold clamping unit 10. However, the toggle mechanism 20 may be applied to the ejector unit 50. That is, the toggle mechanism 20 of each of the above-described embodiments amplifies a thrust of the mold clamping motor 25. However, the toggle mechanism 20 may amplify a thrust of the ejector motor.

### Reference Signs List

10: mold clamping unit
12: stationary platen
13: movable platen
15: toggle support
151: toggle support body portion
152: arm portion
157C: first bearing portion (guide)
157D: first bearing portion (guide)
158C: second bearing portion (guide)
158D: second bearing portion (guide)
159C: guide unit
159D: guide unit
163D: ball (rolling element)
164D: ball (rolling element)
19: guide
20: toggle mechanism
21: crosshead
211: main body portion
212: link coupling portion
213: guide insertion portion (guided portion)
213C: shaft portion (guided portion)
213D: shaft portion (guided portion)
22: first link
23: second link
24: third link
25: mold clamping motor
26: motion conversion mechanism
27: screw shaft
28: screw nut
30: mold unit
40: injection unit
50: ejector unit

## Claims

1. An injection molding machine comprising:
a toggle mechanism (20);
a motor (25) which operates the toggle mechanism (20);
a motion conversion mechanism (26) which converts a rotary motion of the motor (25) into a linear motion of a crosshead (21, 21B) of the toggle mechanism (20); and
a guide (19, 19B) which guides the crosshead (21, 21B),
wherein the toggle mechanism (20) includes the crosshead (21, 21B) and a link (24) which is oscillatingly coupled to the crosshead (21, 21B),
wherein the crosshead (21, 21B) includes a main body portion (211, 211A, 211B) to which the motion conversion mechanism (26) is attached, a link coupling portion (212, 212A) to which the link (24) is oscillatingly coupled, and a guided portion which is guided by the guide (19, 19B), and
wherein a dimension of the guided portion in a guide direction is longer than a dimension of the main body portion (211, 211A, 211B) in the guide direction,
wherein the guided portion includes a guide insertion portion (213, 213A, 213B) into which the guide (19, 19B) is inserted, and
wherein a dimension of the guide insertion portion (213, 213A, 213B) in the guide direction is longer than the dimension of the main body portion (211, 211A, 211B) in the guide direction, and
wherein the link coupling portion (212, 212A) protrudes from the main body portion (211, 211A, 211B) in the guide direction, and
wherein the guide insertion portion (213, 213A, 213B) further protrudes from the main body portion (211, 211A, 211B) in the guide direction than the link coupling portion (212, 212A) .

2. An injection molding machine comprising:
a toggle mechanism (20);
a motor (25) which operates the toggle mechanism (20);
a motion conversion mechanism (26) which converts a rotary motion of the motor (25) into a linear motion of a crosshead (21, 21B, 21C) of the toggle mechanism (20); and
a guide (19, 19B, 159C) which guides the crosshead (21, 21B, 21C),
wherein the toggle mechanism (20) includes the crosshead (21, 21B, 21C) and a link (24) which is oscillatingly coupled to the crosshead (21, 21B, 21C),
wherein the crosshead (21, 21B, 21C) includes a main body portion (211, 211A, 211B, 211C) to which the motion conversion mechanism (26) is attached, a link coupling portion (212, 212A) to which the link (24) is oscillatingly coupled, and a guided portion which is guided by the guide (19, 19B, 159C), and
wherein a dimension of the guided portion in a guide direction is longer than a dimension of the main body portion (211, 211A, 211B, 211C) in the guide direction,
wherein a plurality of the guides are provided at intervals in the guide direction of the guided portion,
wherein the guided portion includes a shaft portion (213C) which is guided by the plurality of guides, and
wherein a dimension of the shaft portion (213C) in the guide direction is longer than the dimension of the main body portion (211C) in the guide direction.

3. The injection molding machine according to claim 2,
wherein the guide unit (159C) is configured of the plurality of guides, and
wherein a dimension of the guide unit (159C) in the guide direction is longer than the dimension of the main body portion (211C) in the guide direction.

4. The injection molding machine according to claim 2 or 3,
wherein the guide includes a bearing portion (157C, 158C) which is in contact with the shaft portion (213C).

5. The injection molding machine according to claim 4,
wherein the bearing (157C, 158C) portion includes a rolling element which is in contact with the shaft portion (213C).

## Patentansprüche

1. Spritzgießmaschine, umfassend:
einen Kniehebelmechanismus (20);
einen Motor (25), der den Kniehebelmechanismus (20) betätigt;
einen Bewegungsumwandlungsmechanismus (26), der eine Drehbewegung des Motors (25) in eine lineare Bewegung eines Kreuzkopfes (21, 21B) des Kniehebelmechanismus (20) umwandelt; und
eine Führung (19, 19B), die den Kreuzkopf (21, 21B) führt,
wobei der Kniehebelmechanismus (20) den Kreuzkopf (21, 21B) und ein Bindeglied (24), das oszillierend mit dem Kreuzkopf (21, 21B) gekoppelt ist, enthält,
wobei der Kreuzkopf (21, 21B) einen Hauptkörperabschnitt (211, 211A, 211B), an dem der Bewegungsumwandlungsmechanismus (26) angebracht ist, einen Bindeglied-Kopplungsabschnitt (212, 212A), an den das Bindeglied (24) oszillierend gekoppelt ist, und einen geführten Abschnitt, der von der Führung (19, 19B) geführt wird, enthält, und
wobei eine Abmessung des geführten Abschnitts in einer Führungsrichtung länger ist als eine Abmessung des Hauptkörperabschnitts (211, 211A, 211B) in der Führungsrichtung,
wobei der geführte Abschnitt einen Führungseinbringungsabschnitt (213, 213A, 213B) aufweist, in den die Führung (19, 19B) eingebracht wird, und
wobei eine Abmessung des Führungseinbringungsabschnitts (213, 213A, 213B) in der Führungsrichtung länger ist als die Abmessung des Hauptkörperabschnitts (211, 211A, 211B) in der Führungsrichtung, und
wobei der Bindeglied-Kopplungsabschnitt (212, 212A) von dem Hauptkörperabschnitt (211, 211A, 211B) in der Führungsrichtung vorsteht, und
wobei der Führungseinbringungsabschnitt (213, 213A, 213B) weiter von dem Hauptkörperabschnitt (211, 211A, 211B) in der Führungsrichtung vorsteht als der Bindeglied-Kopplungsabschnitt (212, 212A).

2. Spritzgießmaschine umfassend:
einen Kniehebelmechanismus (20);
einen Motor (25), der den Kniehebelmechanismus (20) betätigt;
einen Bewegungsumwandlungsmechanismus (26), der eine Drehbewegung des Motors (25) in eine lineare Bewegung eines Kreuzkopfes (21, 21B, 21C) des Kniehebelmechanismus (20) umwandelt; und
eine Führung (19, 19B, 159C), die den Kreuzkopf (21, 21B, 21C) führt,
wobei der Kniehebelmechanismus (20) den Kreuzkopf (21, 21B, 21C) und ein Bindeglied (24), das oszillierend mit dem Kreuzkopf (21, 21B, 21C) gekoppelt ist, enthält,
wobei der Kreuzkopf (21, 21B, 21C) einen Hauptkörperabschnitt (211, 211A, 211B, 211C), an dem der Bewegungsumwandlungsmechanismus (26) angebracht ist, einen Bindeglied-Kopplungsabschnitt (212, 212A), an den das Bindeglied (24) oszillierend gekoppelt ist, und einen geführten Abschnitt, der durch die Führung (19, 19B, 159C) geführt wird, enthält, und
wobei eine Abmessung des geführten Abschnitts in einer Führungsrichtung länger ist als eine Abmessung des Hauptkörperabschnitts (211, 211A, 211B, 211C) in der Führungsrichtung,
wobei mehrere der Führungen in Abständen in der Führungsrichtung des geführten Abschnitts vorgesehen sind,
wobei der geführte Abschnitt einen Schaftabschnitt (213C), der durch die mehreren Führungen geführt wird, enthält, und
wobei eine Abmessung des Schaftabschnitts (213C) in der Führungsrichtung länger ist als die Abmessung des Hauptkörperabschnitts (211C) in der Führungsrichtung.

3. Spritzgießmaschine nach Anspruch 2,
wobei die Führungseinheit (159C) aus den mehreren Führungen konfiguriert ist, und
wobei eine Abmessung der Führungseinheit (159C) in der Führungsrichtung länger ist als die Abmessung des Hauptkörperteils (211C) in der Führungsrichtung.

4. Spritzgießmaschine nach Anspruch 2 oder 3,
wobei die Führung einen Lagerabschnitt (157C, 158C), der mit dem Schaftabschnitt (213C) in Kontakt steht, enthält.

5. Spritzgießmaschine nach Anspruch 4,
wobei der Lagerabschnitt (157C, 158C) einen Wälzkörper, der mit dem Schaftabschnitt (213C) in Kontakt steht, enthält.

## Revendications

1. Une machine de moulage par injection comprenant :
un mécanisme à bascule (20) ;
un moteur (25) qui actionne le mécanisme à bascule (20) ;
un mécanisme de conversion de mouvement (26) qui convertit un mouvement de rotation du moteur (25) en un mouvement linéaire d'une traverse (21, 21B) du mécanisme à bascule (20) ; et
un guide (19, 19B) qui guide la traverse (21, 21B),
dans laquelle le mécanisme à bascule (20) inclut la traverse (21, 21B) et une liaison (24) qui est couplée de manière oscillante à la traverse (21, 21B),
dans laquelle la traverse (21, 21B) inclut une partie de corps principal (211, 211A, 211B) à laquelle le mécanisme de conversion de mouvement (26) est fixé, une partie de couplage de liaison (212, 212A) à laquelle la liaison (24) est couplée de manière oscillante, et une partie guidée qui est guidée par le guide (19, 19B), et
dans laquelle une dimension de la partie guidée dans une direction de guidage est plus longue qu'une dimension de la partie de corps principal (211, 211A, 211B) dans la direction de guidage,
dans laquelle la partie guidée inclut une partie d'insertion de guide (213, 213A, 213B) dans laquelle le guide (19, 19B) est inséré, et
dans laquelle une dimension de la partie d'insertion de guide (213, 213A, 213B) dans la direction de guidage est plus longue que la dimension de la partie de corps principal (211, 211A, 211B) dans la direction de guidage, et
dans laquelle la partie de couplage de liaison (212, 212A) fait saillie de la partie de corps principal (211, 211A, 211B) dans la direction de guidage, et
dans laquelle la partie d'insertion de guide (213, 213A, 213B) fait davantage saillie de la partie de corps principal (211, 211A, 211B) dans la direction de guidage que la partie de couplage de liaison (212, 212A).

2. Une machine de moulage par injection comprenant :
un mécanisme à bascule (20) ;
un moteur (25) qui actionne le mécanisme à bascule (20) ;
un mécanisme de conversion de mouvement (26) qui convertit un mouvement de rotation du moteur (25) en un mouvement linéaire d'une traverse (21, 21B, 21C) du mécanisme à bascule (20) ; et
un guide (19, 19B, 159C) qui guide la traverse (21, 21B, 21C),
dans laquelle le mécanisme à bascule (20) inclut la traverse (21, 21B, 21C) et une liaison (24) qui est couplée de manière oscillante à la traverse (21, 21B, 21C),
dans laquelle la traverse (21, 21B, 21C) inclut une partie de corps principal (211, 211A, 211B, 211C) à laquelle le mécanisme de conversion de mouvement (26) est fixé, une partie de couplage de liaison (212, 212A) à laquelle la liaison (24) est couplée de manière oscillante, et une partie guidée qui est guidée par le guide (19, 19B, 159C), et
dans laquelle une dimension de la partie guidée dans une direction de guidage est plus longue qu'une dimension de la partie de corps principal (211, 211A, 211B, 211C) dans la direction de guidage,
dans laquelle une pluralité des guides sont prévus à intervalles dans la direction de guidage de la partie guidée,
dans laquelle la partie guidée inclut une partie arbre (213C) qui est guidée par la pluralité de guides, et
dans laquelle une dimension de la partie arbre (213C) dans la direction de guidage est plus longue que la dimension de la partie de corps principal (211C) dans la direction de guidage.

3. La machine de moulage par injection selon la revendication 2,
dans laquelle l'unité de guidage (159C) est constituée de la pluralité de guides, et
dans laquelle une dimension de l'unité de guidage (159C) dans la direction de guidage est plus longue que la dimension de la partie de corps principal (211C) dans la direction de guidage.

4. La machine de moulage par injection selon la revendication 2 ou 3,
dans laquelle le guide inclut une partie de roulement (157C, 158C) qui est en contact avec la partie arbre (213C).

5. La machine de moulage par injection selon la revendication 4,
dans laquelle la partie de roulement (157C, 158C) inclut un élément roulant qui est en contact avec la partie arbre (213C).
